# EUROPEAN PATENT SPECIFICATION

(11) **EP 1 788 225 B1**
(45) Date of publication and mention of the grant of the patent: **27.08.2008**
(21) Application number: 05111031.0
(22) Date of filing: 21.11.2005
(51) Int. Cl.: F02D 23/00, F02B 37/16, F02B 33/44

(54) **System and method for controlling the charging air flow of an internal combustion engine**
Anordnung und Verfahren zur Ladeluftregelung in einer Brennkraftmaschine
Système et méthode pour contrôler l'air de suralimentation dans un moteur de combustion interne

(43) Date of publication of application: 23.05.2007
(73) Proprietor: Ford Global Technologies, LLC, Dearborn, MI 48126 (US)
(72) Inventor: ALMKVIST, Göran, 443 31, Lerum (SE)
(74) Representative: Romare, Laila Anette

(56) References cited:
- EP-A- 0 404 114
- US-A- 4 873 961
- US-B1- 6 282 898
- US-B1- 6 363 721

## Description

The present invention relates to a system and a method for controlling the charging air flow of an internal combustion engine having an air intake manifold with an intake air pipe and an exhaust manifold and comprising a supercharger having a suction side and a discharge side, said intake air pipe extending from the discharge side of said supercharger via an intercooler to the engine for supplying combustion air thereto, and a throttle valve disposed in said intake air pipe for controlling the supply of combustion air to said engine.

### BACKGROUND ART

In modern vehicles it is known that the specific power output of an internal combustion engine can be increased by supplying pressurized air to the engine inlet port, so that a larger charge of air can be inducted into the combustion chamber or chambers of the engine during each cycle. In a spark ignition engine it is common to induce a fuel/air mixture through the inlet port, although direct injection of fuel is also possible. In a compression ignition engine it is air that is induced, with fuel being injected directly into the compressed charge. It is known to supply this induced air in a pressurized condition.

The application of forced induction to spark ignition engine presents various problems, one of which is that of pre-ignition of the air/fuel charge prior to the normal ignition timing. Such pre-ignition, commonly termed knocking, degrades engine performance and applies damaging shock forces to the engine; it should always be avoided during normal engine operation. The necessity to avoid pre-ignition limits the compression ratio that can be utilized in spark ignition engines and may require the use of high octane fuels which delay the inception of pre-ignition. It can also limit the operating range under which forced induction can be used effectively, and may require the use of intercoolers to cool the compressed air before it is applied to the engine. In typical applications, this has meant that forced induction can only be applied effectively under essentially full throttle conditions at high engine speeds. Under such conditions it is effective in increasing specific power output, but in most automotive applications, high speed full throttle operation occurs for only a very small proportion of the total operating time of the engine. It has also often been necessary to avoid conditions under which excessive temperatures and pressures occur with the combustion chamber or chambers of the engine during the compression stroke, since these conditions tend to result in pre-ignition.

One approach to this problem has involved so-called lean-burn technology, as disclosed for example in US 5 125 235. In such an engine system, the boost applied by the forced induction system is also related to the air/fuel ratio of the mixture applied to the engine, with this ratio increasing with increasing boost of the intake air. This tends to reduce the tendency to pre-ignition, while the increased volume of air passed through the system assists in reducing engine temperatures, and extends the range over which some boost can be effectively applied.

An alternative solution is disclosed in US-6363721 as well as in US 6 282 898, which relates to a supercharged engine where a compressor is arranged to boost intake air pressure by more than one atmosphere throughout that portion of the operating range of the engine which corresponds to significant opening of the throttle. The throttle and the intake port provides sufficient throttling of the intake air flow over said portion of the operating range to provide substantially adiabatic expansion of the air delivered by the compressor through the intake conduit, causing a cooling of the delivered air. However, the compressor is arranged to maintain a boost pressure for the intake air during the entire working cycle of the engine. This will cause a rise in temperature of the delivered air that can not be offset against the adiabatic expansion, causing an increased combustion temperature and a reduction in volumetric efficiency.

The object of the invention is therefore to solve the above problems by providing an improved system for controlling the charging air flow, whereby the combustion temperature is lowered and the volumetric efficiency is increased.

### DISCLOSURE OF INVENTION

The invention relates to a system for controlling the charging air flow of an internal combustion engine, according to claim 1, a method for operating said system, according to claim 10.

According to one embodiment, the invention relates to a system for controlling the charging air flow of an internal combustion engine having at least one combustion chamber. The arrangement, or air induction system, comprises an air intake manifold with an intake air conduit connected to a supply of ambient air, which ambient air may first pass through an air filter. The engine may also be provided with an exhaust gas manifold connected to suitable exhaust gas after treatment devices, such as a catalytic converter and a soot filter. The arrangement also comprises a supercharger having a suction or intake side and a discharge side, an air conduit extending to the suction side of the supercharger for supplying the supercharger with ambient air and an intercooler having an inlet connected to the supercharger discharge side. In the subsequent text, the term supercharger includes all suitable devices for pressurizing the charge air above atmospheric pressure. Examples of commonly used superchargers are exhaust driven turbochargers, with an intake connected to the exhaust manifold of the engine, and electrically, mechanically or hydraulically driven compressors, having a suction side connected to the induction air intake.

The intercooler has an outlet connected to the air intake manifold for supplying combustion air to an inlet port adjacent to an intake valve for each cylinder of the engine. Here the inlet port is defined as a volume immediately upstream of the intake valve. In a multi-throttle arrangement, this volume may be enclosed by a throttle device located in each intake pipe upstream of the intake valve. According to one example, a throttle device is disposed in an intake air pipe between the air intake manifold and the inlet port for controlling the supply of air to the combustion chamber. According a second example, applicable to V4, V6 and straight 6-cylinder engines, a throttle device may be provided upstream of the intake pipes for each bank of two or three cylinders. The throttle device is arranged to provide substantially adiabatic expansion of the charge air during an induction stroke of the engine.

According to one embodiment, the valve device may comprise an electronically controlled, switching or non-switching throttle valve. A non-switching throttle valve may be controlled for achieving optimum adiabatic expansion at full engine load, but may also be adjusted for engine loads less than full load or other engine related conditions. A non-switching throttle valve provided for each intake pipe of the engine may replace a main throttle valve controlled by the driver. Such non-switching throttle valves may be controlled independently of the operating cycles of the engine.

According to a first alternative embodiment, a switching throttle valve may be controlled between an open position during the induction stroke for achieving optimum adiabatic expansion at full engine load and a closed position during the remaining strokes. Such switching throttle valves may be controlled to switch using the timing of the operating cycles of the engine.

According to a second alternative embodiment, the valve device may comprise a fixed throttle valve set at a predetermined position for optimum adiabatic expansion at full engine load.

According to the invention, supercharged air is passed through an air intake conduit and an intercooler into a conduit forming a substantially closed volume between the intercooler outlet and the controllable throttle valve or a similar suitable valve. As stated above, throttle valves may be mounted close to an inlet port on each cylinder. When inducing the charge air to the engine from a more or less closed volume during the induction stroke the charge will undergo a substantially adiabatic expansion as it passes the controllable throttle valve. The effect of this expansion is that the charge of air supplied to the combustion chamber will be significantly cooler than the air leaving the intercooler. It is favorable to combine this effect with boosted engines due to the fact that it is possible to compensate a reduction of volumetric efficiency by applying an "over boost" to the closed volume. Here, the term "over boost" is defined as a boost pressure supplied by the supercharger, which pressure is higher than the pressure supplied by a supercharger in an engine not provided with a throttle valve adjacent the inlet port. For example, if a supercharged engine is normally supplied with charge air at a pressure up to 1,5 bar, the same engine may be supplied with charge air at a pressure up to 1,5-2 bar when provided with throttle valves according to the invention.

In an Otto engine, operating on a four stroke cycle, the effect of the adiabatic expansion in combination with a boost system may reduce the knocking behavior and increase the volumetric efficiency due to cooler charge and thereby produce an increased power output from the engine. At part load this effect may reduce the pumping losses by up to 50%. On a Diesel engine the reduced charge air temperature may be used for reducing the levels of NOₓ and the amount of soot at part load. In particular, the NOₓ levels are affected by the charge air temperature.

Fitting a throttle device according to the invention adjacent an inlet port as described above may increase the entropy of the air mass that passes a throttle device of the non-switching or fixed type. The increase in entropy will cause an increase of the charge air temperature to a level above ambient temperature when the charge air pressure increases after each induction stroke. For an Otto cycle this effect is negative at full load, but positive at low load operation, while the effect is always negative for a Diesel cycle. According to the invention, the charge air temperature may be reduce back to ambient temperature by bleeding the air mass with increased entropy out of the inlet port during the non-induction strokes of the engine.

The above text also describes a throttle device of the switching type that may be fitted adjacent an inlet port to achieve adiabatic expansion during the induction stroke and to close the throttle device during the remaining strokes. This arrangement gives no increased entropy in the remaining air mass in the throttled volume of the inlet port when operating at full load. As no mass flow passes the throttle device in its closed position, the temperature will not increase and there is no need for scavenging additional charge air. This is an advantage for Diesel engine applications, where this effect is also advantageous at part load to improve fuel efficiency. However, a return conduit, preferably combined with a controllable switching valve that closes during each induction cycle, improves this effect.

According to one embodiment, the arrangement may comprise a return conduit connecting the intake air pipe of the engine with the suction or intake side of the supercharger. The return conduit may be connected to an intake side of a compressor in the supercharger or to an intake side of a turbine in a turbocharger. In an alternative embodiment the charge air may be supplied directly to the compressor stage of the supercharger. The return conduit may be arranged to scavenge at least a part of the supercharged charge air from the inlet port to the supercharger during at least a non-induction stroke of the engine. In the case of a turbocharger, this arrangement assists in maintaining the pressure delivered from the turbocharger and may reduce the turbo lag. Said return conduit may be connected to bleed charge air from the intake air pipe downstream of the throttle device in the intake air pipe.

As stated above, the throttle valve used for adiabatic expansion of the charge air may be a controllable non-switching throttle valve, arranged to be a controlled independently of the operating cycles of the engine, or a controllable switching throttle valve, arranged to be open during an induction stroke of the engine and to be closed during a non-induction stroke of the engine. According to a first alternative, each return conduit may be provided with a valve for controlling the pressure in the associated inlet port and the mass flow through the return conduit. A controllable non-switching valve may be used to control mass flow and pressure during all strokes of the engine, wherein the valve may be partially or fully closed during an induction stroke.

According to a second alternative, the return conduit is provided with a switching valve may be arranged to be closed during an induction stroke of the engine and to be opened during a non-induction stroke of the engine. The switching valve may be combined with a fixed or controllable throttle in order to control the mass flow in the return conduit.

According to a third alternative, the valve in the return conduit may be pressure controlled, wherein the valve may open and bleed charge air when the pressure in the inlet port or the return conduit upstream of the valve reaches a predetermined pressure. According to a fourth alternative, the return conduit may be provided with a fixed or controllable throttle device providing a pressure dependent, substantially constant mass flow being bled from the inlet port back to supercharger.

In supercharged Otto engines it is often preferable to use an intake or exhaust valve camshaft with a relatively long duration cam profile to achieve an overlap when both the intake valve and the exhaust valve are open. Alternatively a Variable Valve Timing (VVT) system may be used. Preferably a Dynamic Variable Valve Timing (DVVT) system, which continuously adjusts the valve timing according to driving conditions, is used to achieve improved intake efficiency and exhaust performance. By using a relatively high boost pressure in the throttled volume adjacent the inlet port it is possible to scavenge residual exhaust gas from a combustion chamber during intake valve and exhaust valve overlap. By providing a higher boost pressure than the boost pressure normally present at the time of intake valve closure, remaining re-circulated exhaust gas (EGR) in the combustion chamber may be flushed out and replaced by cooled charge air during valve overlap. This increases the volumetric efficiency and the power output of the engine. If a turbocharger is used, some of the energy in the charge air flushed through the combustion chamber during overlap may be recovered as it passes through the turbine stage of the turbocharger. However, if the charge pressure is maintained in the inlet port between each induction stroke, then the entropy of the air mass that passes the throttle would increase. As stated above, this would increase the charge temperature in the inlet port above the ambient temperature when the charge pressure is increased after each induction stroke. According to one method of operation, used at least during full load, the temperature may be reduced back to ambient by bleeding, or scavenging the air mass with increased entropy out from the inlet port during the non induction stroke. As described above, the air induction system may be provided return conduit with a controllable valve which is arranged to close fully or partially during the induction stroke and open during the remaining strokes. The energy in the scavenged air mass flow may be recovered by connecting the return conduit to the supercharger, where it may be used for increasing the boost pressure.

In addition it is possible to obtain a higher compressor efficiency because the increased boost pressure, or over boost, moves the working line in the compressor map to a better position with respect to compressor efficiency.The air mass flow caused by scavenging during the non-induction strokes will affect the compressor working line by moving it away from the surge line. At part load the effect of supplying a cooler air charge and scavenging as described above may reduce the pumping losses by up to 50%. Tests have shown a possible fuel efficiency gain of up to 5-8%. On a diesel engine this effect can be used to reduce the amount of nitrous oxides (NOₓ) and soot in the exhaust gas at part load. In particular, the NOₓ levels may be significantly lowered by lowering the air charge temperature. Simulation shows that charge temperatures decrease of up to 100°C may be possible, for 100% over boost, and an estimation of the NOx reduction shows that levels required for achieving ULEV 2 for tailpipe emissions may be reached without requiring modification of the exhaust after treatment system. ULEV2 is the California Air Resources Board (CARB) exhaust emission standard for the 2^{nd} generation Ultra Low Emissions Vehicle (ULEV2), being phased in from 2004 to replace the 1^{st} generation emission standard (ULEV1) by 2007.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows a schematic illustration of a purge vapour control system according to the present invention
- Figure 2A-C: shows schematic representations of a number of embodiments of the invention; and
- Figure 3: shows schematic diagrams of temperature and pressure for one steady state operating condition of an engine

### EMBODIMENTS OF THE INVENTION

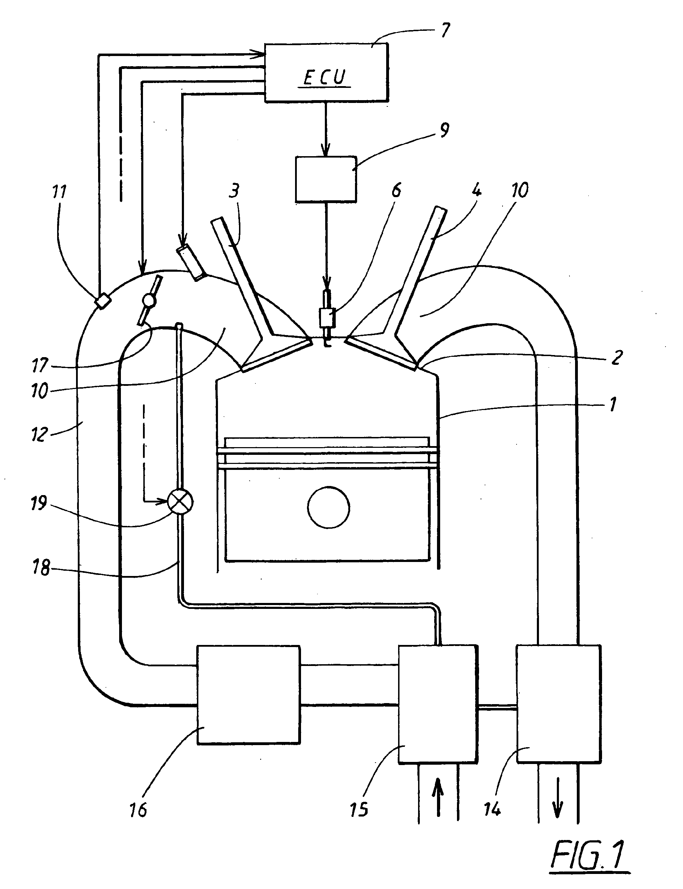

Figure 1 shows a diagrammatic illustration of a turbocharged engine to which the invention may be applied. A single cylinder engine is shown for the sake of simplicity, but it should be understood that the invention may, and usually will, be applied to multiple cylinder engines, and that components such as valves may be duplicated in accordance with common practice. Although the example is related to a turbocharged engine, the general principle may also be applied to other supercharged engines.

While the invention is described with reference to a four stroke engine having induction, compression, power and exhaust strokes, it should be appreciated that the invention is also applicable to multi-stroke stroke and rotary engines having induction, compression, power and exhaust phases. For the purposes of the subsequent description a four cycle operation is assumed.

In Figure 1, the engine has a cylinder 1, with a cylinder head 2 with inlet and outlet valves 3 and 4, a piston 5 attached to a connecting rod and a crankshaft in a crankcase (not shown), a spark plug 6, and an electronic control unit (ECU) 7 controlling a fuel injection pump (not shown) and a fuel injector 8 and an ignition unit 9 connected to the spark plug 6 to control the amount and timing of fuel injected into an inlet port 10 and the timing of voltage applied to the spark plug. The ECU 7 receives inputs from various sensors in conventional manner, although for the purposes of the present invention these should include a pressure sensor 11 in an intake conduit 12 as conventionally provided in turbocharged engines. Gases from an exhaust port 13 are applied to an exhaust turbine 14 and an exhaust after treatment unit, such as a catalytic converter (not shown) before discharge to the atmosphere. The turbine 14 drives an intake air compressor 15 which compresses charge air supplied to the inlet port 10. An intercooler 16 is provided between the compressor 15 and the inlet port 10.

The above arrangement also comprises a return conduit 18 connected to the inlet port 10 downstream of a throttle valve 17 in the intake conduit 12 and to the inlet side of the compressor 15. The return conduit 18 is arranged to scavenge at least a part of the supercharged charge air from the inlet port 10 to the compressor 15 during at least all non-induction strokes of the engine. The throttle valve 17 used for effecting adiabatic expansion of the charge air during at least the induction stroke of the engine. The throttle valve 17 is a controllable non-switching throttle valve that is controlled by the ECU 7 to be open during an induction stroke of the engine and to be controlled during all non-induction strokes of the engine.

The return conduit 18 is provided with a controllable non-switching valve 19, which valve is controlled by the ECU 7 to be closed during the induction stroke of the engine and to be opened during the non-induction strokes of the engine. The opening of the controllable non-switching valve 19 is controlled as a function of a signal from the pressure sensor 11 in the intake conduit 12, whereby the valve is opened when a predetermined charge air pressure is reached or when required by a predetermined operating condition.

Instead of a controllable non-switching valve, a controllable switching valve can be used. Such a controllable switching valve 19 is controlled to close during the induction strokes and open during all other strokes of the engine. Alternatively, the controllable valve 19 can be pressure controlled, whereby the valve opens when a predetermined pressure is reached in the return conduit 18. An example of such a valve is a spring loaded valve.

Bleeding part of the supercharged charge air prevents the entropy of the air mass that passes the throttle valve 17 from increasing, as would be the case if the charge pressure was maintained in the inlet port 10 between each induction stroke. Consequently, an increase in the air charge temperature above the ambient temperature due to an increase in pressure in the inlet port after each induction stroke can be avoided by scavenging at least a part of the supercharged charge air to the compressor 15. The energy in the scavenged air can be at least partially recuperated by allowing it to pass through the compressor.

Although a turbocharger formed by components 14 and 15 is described, other forced induction arrangements can be used, such as an engine driven blower or a separate air compressor with or without an air reservoir. Whatever forced induction system is used, it is important that it be capable of maintaining substantial compression of air passing through the inlet port 10 upstream of a throttle valve 17, by at least one atmosphere, and typically between 1.5 and 2 bars, over that portion of the operating range of the engine in which it develops significant power. This will usually entail provision of a turbocharger or other air compression means which provides substantial compression at much lower engine speeds and throttle openings than is conventional.

The blower characteristics are preferably selected so that during the above portion of the operating range of the engine, enough air will be induced into a cylinder of the engine during an induction stroke that the absolute pressure in the cylinder at the end of the compression stroke prior to ignition by the spark plug 6 is in the region of, or above, ten atmospheres. At the same time, the air mass flow past the throttle and inlet valves will result in substantially adiabatic expansion and hence cooling of the air entering the cylinder, to which a further cooling effect is applied by evaporation of the fuel injected into the port. This cooling limits the temperature rise during the subsequent compression stroke.

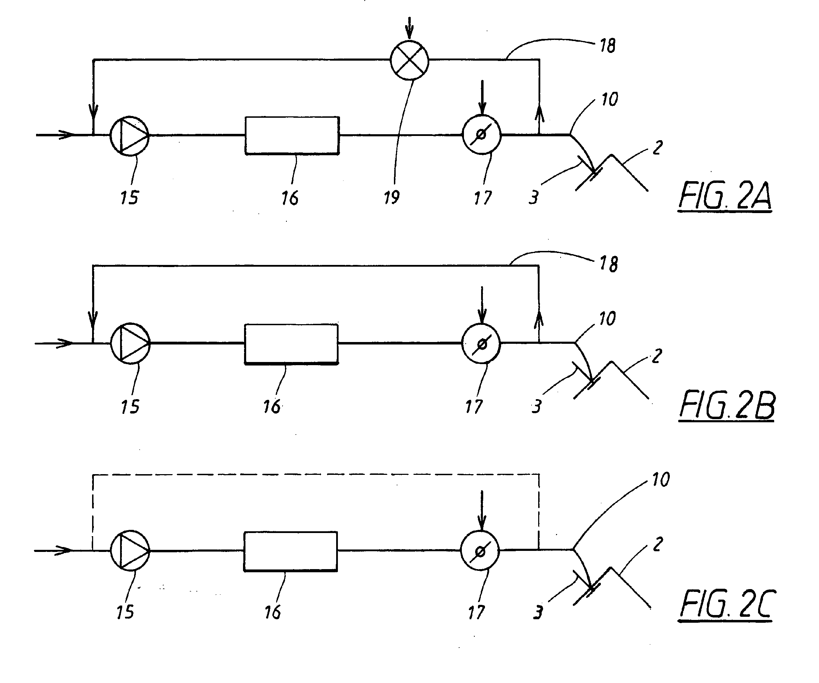

Figure 2A shows a schematic representation of the embodiment of Figure 1. As described above, the arrangement comprises a compressor 15, an intercooler 16 and a fixed throttle valve 17a for supplying supercharged charge air to an inlet port 10 connected to a cylinder 2 via an intake valve 3. The return conduit 18 is arranged to connect the inlet port 10 downstream of the throttle valve 17a with the inlet side of the compressor 15. The return conduit 18 scavenges at least a part of the supercharged charge air from the inlet port 10 to the compressor 15 during all non-induction strokes of the engine. The return conduit 18 is provided with a pressure controlled valve 19a, which valve is arranged to open when a predetermined pressure is reached.

An alternative embodiment is shown in Figure 2B, wherein the throttle valve 17b used for adiabatic expansion of the charge air is a non-switching throttle valve controlled by the ECU 7 to be open during an induction stroke of the engine and to be controlled during all non-induction strokes of the engine. The return conduit 18 is arranged to connect the inlet port 10 downstream of the throttle valve 17b with the inlet side of the compressor 15 for scavenging at least a part of the supercharged charge air. The return conduit 18 is provided with a controllable switching or non-switching valve 19b for scavenging at least a part of the supercharged charge air from the inlet port 10 to the compressor 15 during at least all non-induction strokes of the engine.

In the embodiment of Figure 2B, the non-switching throttle valve may be replaced by a switching throttle valve controlled by the ECU 7 to be open during an induction stroke of the engine and to be closed during all non-induction strokes of the engine.

A further alternative embodiment is shown in Figure 2C, wherein the throttle valve 17c used for adiabatic expansion of the charge air is a non-switching throttle valve controlled by the ECU 7 to be open during an induction stroke of the engine and to be controlled during all non-induction strokes of the engine. The return conduit 18 is provided with a fixed throttle 19c, limiting the air mass flow to a predetermined amount, for continuously scavenging a part of the supercharged charge air from the inlet port 10 to the compressor 15.

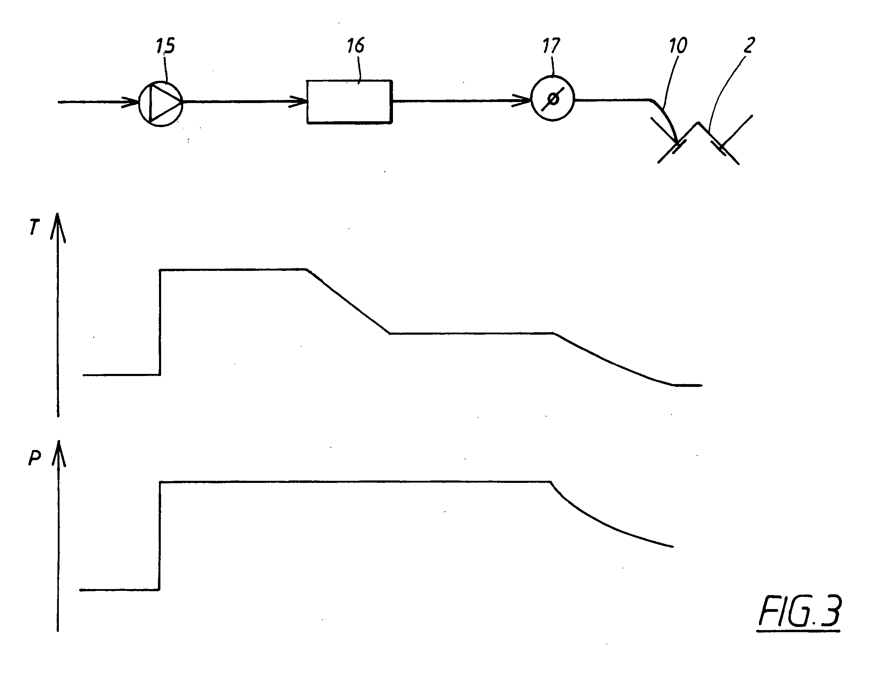

Figure 3 shows schematic diagrams of temperature and pressure for one steady state operating condition of an engine provided with the arrangement of Figure 1. In this example, compressed air leaves the compressor 15 at a temperature of 100°C after being compressed to an absolute pressure of 1,8 bar. The compressed air is then passed through the intercooler 16, where the air is cooled to 35°C and the pressure is maintained at 1,8 bar. The throttle 17 adjacent the inlet port 10 causes an adiabatic expansion that reduces the temperature of the air to 5°C, while the pressure drops to 1,4 bar. By using this throttle 17 to achieve an adiabatic expansion of the charge air, the temperature in the cylinder 1 at the end of a compression stroke is reduced by about 80°C when the engine is operated at full load.

During the same portion of the operating range of the engine, the initial combustion pressure during the power stroke will be high because of the size of compressed charge, and the drop in pressure during the power stroke will also be large, producing substantial adiabatic expansion and cooling of the combustion gases. This is reflected in reduced exhaust gas temperatures, improved volumetric efficiency, and lower combustion chamber temperature at the beginning of a subsequent induction stroke, which in turn contributes to restricting the temperature rise occurring during the compression stroke and preventing pre-ignition. It has been found that by these means, it is possible to maintain high effective compression ratios without causing pre-ignition, and without increasing fuel octane requirements. By maintaining a relatively high effective compression ratio whenever the engine is delivering significant power, a considerable increase in thermal efficiency is obtained, contributing both to increased specific power output and reduced generation of waste heat, which in turn reduces exhaust and combustion chamber temperatures.

The ECU is set up to control fuel injection so as to provide a substantially stoichiometric mixture during normal engine operation. This tends to maximize combustion efficiency and minimize unwanted emissions, and contrasts with so-called "lean-burn" technology in which excess air is relied upon to dilute the combustion gases. The reduced combustion chamber temperatures and stoichiometric mixture are both factors tending to inhibit generation of nitrous oxides.

## Claims

1. A system for controlling the charging air flow of an internal combustion engine having at least one combustion chamber, which system comprises an air intake manifold with an intake air conduit connected to a supply of ambient air, an exhaust gas manifold, a supercharger having a inlet side and a discharge side, an air conduit extending to the inlet side of the supercharger for supplying said supercharger with ambient air, an intercooler having an inlet connected to the supercharger discharge side and an outlet connected to the air intake manifold for supplying supercharged charge air to the engine, a throttle valve disposed in an intake air pipe upstream of an inlet port adjacent an intake valve of the engine for controlling the supply of air to the combustion chamber, wherein the throttle valve is arranged to provide substantially adiabatic expansion of the charge air during an induction stroke of the engine, and an electronic control unit for controlling the system, **characterized in that** the system is provided with means for scavenging at least part of the supercharged charge air downstream of the throttle valve during at least a non-induction stroke of the engine.

2. A system according to claim 1, **characterized in that** the throttle valve is a fixed throttle valve.

3. A system according to claim 1, **characterized in that** the throttle valve is a controllable non-switching throttle valve arranged to be open during an induction stroke of the engine and to be controlled during a non-induction stroke of the engine.

4. A system according to claim 1, **characterized in that** the throttle valve is a controllable switching throttle valve arranged to be open during an induction stroke of the engine and to be closed during a non-induction stroke of the engine.

5. A system according to any one of the above claims 1-4, **characterized in that** the system comprises a return conduit connected between the intake pipe downstream of the throttle valve and the supercharger.

6. A system according to claim 5, **characterized in that** the return conduit is connected to an intake side of a compressor in the supercharger.

7. A system according to claim 5, **characterized in that** the return conduit is connected directly into a compressor stage in the supercharger.

8. A system according to claim 5, **characterized in that** the return conduit is connected to an intake side of a turbine in a turbocharger.

9. A system according to claim 4, **characterized in that** the return conduit is provided with a controllable non-switching valve arranged to be closed during an induction stroke of the engine and to be controlled during a non-induction stroke of the engine.

10. A system according to claim 4, **characterized in that** the return conduit is provided with a controllable switching valve, and that the controllable switching valve is arranged to be closed during an induction stroke of the engine and to be opened during a non-induction stroke of the engine.

11. A system according to claim 4, **characterized in that** the return conduit is provided with a pressure controlled valve arranged to be opened when a predetermined pressure is reached downstream of the throttle valve.

12. A system according to claim 1, **characterized in that** the system is provided with intake and exhaust valve control means arranged to provide a valve overlap, wherein residual exhaust gas is scavenged from the combustion chamber by the supercharged charge air.

13. A system according to claim 12, **characterized in that** the supercharger is a turbocharger arranged downstream of the combustion chamber.

14. Method for controlling a system according to claim 1, **characterized by** the steps of:
• supercharging charge air to be supplied to an engine,
• performing a first cooling step by passing the supercharged air through an intercooler ,
• performing a second cooling step by means of substantially adiabatic expansion, by expanding the supercharged air through a throttle valve during an induction stroke,
• supplying the charge air to an inlet port of the engine during the induction stroke, and
• scavenging at least part of the charge air from said inlet port during at least a non-induction stroke of the engine.

15. Method for controlling a system according to claim 14, **characterized by** performing a second cooling step by means of substantially adiabatic expansion through a fixed throttle valve.

16. Method for controlling a system according to claim 14, **characterized by** performing a second cooling step by means of substantially adiabatic expansion through a controllable non-switching throttle valve, which valve is opened during an induction stroke of the engine and is controlled during a non-induction stroke of the engine.

17. Method for controlling a system according to claim 14, **characterized by** performing a second cooling step by means of substantially adiabatic expansion through a controllable switching throttle valve, which valve is opened during an induction stroke of the engine and to be closed during a non-induction stroke of the engine.

18. Method according to claim 14, **characterized by** supplying the scavenged charge air to a supercharger.

19. Method according to claim 14, **characterized by** controlling the flow of scavenged charge air by closing a controllable non-switching valve in the return conduit during an induction stroke of the engine and controlling the switching valve during a non-induction stroke of the engine.

20. Method according to claim 14, **characterized by** controlling the flow of scavenged charge air by closing a controllable switching valve in the return conduit during an induction stroke of the engine and opening the switching valve during a non-induction stroke of the engine.

21. Method according to claim 14, **characterized by** controlling the flow of scavenged by opening a pressure controlled valve at a predetermined pressure downstream of the throttle valve.

## Patentansprüche

1. Anordnung zur Regelung des Ladeluftstroms einer Brennkraftmaschine mit wenigstens einer Brennkammer, wobei die Anordnung einen Einlassluftsammler mit einem Einlassluftkanal, der mit einer Umgebungsluftzuführung verbunden ist, einen Auslassluftsammler, einen Lader mit einer Einlassseite und einer Auslassseite, einen Luftkanal, der sich zu der Einlassseite des Laders erstreckt, um den Lader mit Umgebungsluft zu versorgen, einen Zwischenkühler, der mit einem Einlass, der mit der Laderauslassseite verbunden ist, und einem Auslass, der mit dem Einlasssammler verbunden ist, um verdichtete Ladeluft an die Brennkraftmaschine zu liefern, ein Drosselklappenventil, das in einem Einlassluftkanal stromaufwärts einer Einlassöffnung benachbart zu einem Einlassventil der Brennkraftmaschine angeordnet ist, zum Regeln der Luftzuführung zu der Brennkammer, wobei das Drosselklappenventil dafür eingerichtet ist, eine im Wesentlichen adiabatische Expansion der Ladeluft während eines Ansaughubs der Brennkraftmaschine zu erzeugen, und eine elektronische Regelungseinheit zum Regeln der Anordnung aufweist, **dadurch gekennzeichnet, dass** die Anordnung mit einer Einrichtung zum Ausspülen wenigstens eines Teils der verdichteten Ladeluft stromabwärts dem Drosselklappenventil während wenigstens eines Nicht-Ansaughubs der Brennkraftmaschine versehen ist.

2. Anordnung nach Anspruch 1, **dadurch gekennzeichnet, dass** das Drosselklappenventil ein Feststellungs-Drosselklappenventil ist.

3. Anordnung nach Anspruch 1, **dadurch gekennzeichnet, dass** das Drosselklappenventil ein regelbares nicht-schaltendes Drosselklappenventil ist, das dafür eingerichtet ist, während eines Ansaughubs der Brennkraftmaschine offen zu sein, und während eines Nicht-Ansaughubs der Brennkraftmaschine geregelt zu werden.

4. Anordnung nach Anspruch 1, **dadurch gekennzeichnet, dass** das Drosselklappenventil ein regelbares schaltendes Drosselklappenventil ist, das dafür eingerichtet ist, während eines Ansaughubs der Brennkraftmaschine offen zu sein, und während eines Nicht-Ansaughubs der Brennkraftmaschine geschlossen zu sein.

5. Anordnung nach einem der Ansprüche 1 bis 4, **dadurch gekennzeichnet, dass** die Anordnung einen Rücklaufkanal aufweist, der damit zwischen dem Einlasskanal stromabwärts des Drosselklappenventils und dem Lader verbunden ist.

6. Anordnung nach Anspruch 5, **dadurch gekennzeichnet, dass** der Rücklaufkanal mit einer Einlassseite eines Verdichters in dem Lader verbunden ist.

7. Anordnung nach Anspruch 5, **dadurch gekennzeichnet, dass** der Rücklaufkanal direkt mit einer Verdichterstufe in dem Lader verbunden ist.

8. Anordnung nach Anspruch 5, **dadurch gekennzeichnet, dass** der Rücklaufkanal mit einer Einlassseite einer Turbine in einem Turbolader verbunden ist.

9. Anordnung nach Anspruch 4, **dadurch gekennzeichnet, dass** der Rücklaufkanal mit einem regelbaren nicht-schaltenden Ventil versehen ist, das dafür eingerichtet ist, während eines Ansaughubs der Brennkraftmaschine geschlossen zu sein, und während eines Nicht-Ansaughubs der Brennkraftmaschine geregelt zu werden.

10. Anordnung nach Anspruch 4, **dadurch gekennzeichnet, dass** der Rücklaufkanal mit einem regelbaren schaltenden Ventil versehen ist, und dass das regelbare Ventil dafür eingerichtet ist, während eines Ansaughubs der Brennkraftmaschine geschlossen zu sein, und während eines Nicht-Ansaughubs der Brennkraftmaschine offen zu sein.

11. Anordnung nach Anspruch 4, **dadurch gekennzeichnet, dass** der Rücklaufkanal mit einem druckgeregelten Ventil versehen ist, das dafür eingerichtet ist, geöffnet zu werden, wenn ein vorbestimmter Druck stromabwärts des Drosselklappenventils erreicht wird.

12. Anordnung nach Anspruch 1, **dadurch gekennzeichnet, dass** die Anordnung mit einer Einlass- und Auslass-Ventilregeleinrichtung versehen ist, die dafür eingerichtet ist, eine Ventilüberlappung zu erzeugen, wobei restliches Abgas aus der Brennkammer durch die verdichtete Luft ausgespült wird.

13. Anordnung nach Anspruch 12, **dadurch gekennzeichnet, dass** der Lader ein Turbolader ist, der stromabwärts der Brennkammer angeordnet ist.

14. Verfahren zum Regeln einer Anordnung gemäß Anspruch 1, **gekennzeichnet durch** die Schritte:
• Verdichten von Ladeluft, die einer Brennkraftmaschine zuzuführen ist,
• Durchführen eines ersten Kühlungsschrittes, indem die verdichtete Luft **durch** einen Zwischenkühler geführt wird,
• Durchführen eines zweiten Kühlungsschrittes mittels einer im Wesentlichen adiabatischen Expansion, indem die verdichtete Luft über ein Drosselklappenventil während eines Ansaughubs expandiert wird,
• Zuführen der Ladeluft zu einer Einlassöffnung der Brennkraftmaschine während des Ansaughubs, und
• Ausspülen wenigstens eines Teils der Ladeluft aus der Einlassöffnung während wenigstens eines Nicht-Ansaughubs der Brennkraftmaschine.

15. Verfahren zum Regeln einer Anordnung nach Anspruch 14, **gekennzeichnet durch** Durchführen eines zweiten Kühlungsschrittes mittels einer im Wesentlichen adiabatischen Expansion **durch** ein Feststellungs-Drosselklappenventil.

16. Verfahren zum Regeln einer Anordnung nach Anspruch 14, **gekennzeichnet durch** Durchführen eines zweiten Kühlungsschrittes mittels einer im Wesentlichen adiabatischen Expansion **durch** ein regelbares nicht-schaltendes Drosselklappenventil, welches während eines Ansaughubs der Brennkraftmaschine geöffnet ist, und während eines Nicht-Ansaughubs der Brennkraftmaschine geregelt wird.

17. Verfahren zum Regeln einer Anordnung nach Anspruch 14, **gekennzeichnet durch** Durchführen eines zweiten Kühlungsschrittes mittels einer im Wesentlichen adiabatischen Expansion **durch** ein regelbares schaltendes Drosselklappenventil, welches während eines Ansaughubs der Brennkraftmaschine geöffnet ist, und während eines Nicht-Ansaughubs der Brennkraftmaschine zu schließen ist.

18. Verfahren nach Anspruch 14, **dadurch gekennzeichnet, dass** die ausgespülte Ladeluft einem Lader zugeführt wird.

19. Verfahren nach Anspruch 14, **dadurch gekennzeichnet, dass** der Strom der ausgespülten Ladeluft durch Schließen eines regelbaren nicht-schaltenden Ventils in dem Rücklaufkanal während eines Ansaughubs der Brennkraftmaschine geregelt wird und das Schaltventil während eines Nicht-Ansaughubs der Brennkraftmaschine geregelt wird.

20. Verfahren nach Anspruch 14, **dadurch gekennzeichnet, dass** der Strom der ausgespülten Ladeluft durch Schließen eines regelbaren Schaltventils in dem Rücklaufkanal während eines Ansaughubs der Brennkraftmaschine geregelt wird und das Schaltventil während eines Nicht-Ansaughubs der Brennkraftmaschine geöffnet wird.

21. Verfahren nach Anspruch 14, **dadurch gekennzeichnet, dass** der Strom der ausgespülten Ladeluft durch Öffnen eines druckgesteuerten Ventils bei einem vorbestimmten Druck stromabwärts des Drosselklappenventils geregelt wird.

## Revendications

1. Système pour commander le débit d'air de charge d'un moteur à combustion interne possédant au moins une chambre de combustion, le système comprenant un collecteur d'admission d'air avec une conduite d'air d'admission raccordée à une alimentation en air ambiant, un collecteur de gaz d'échappement, un compresseur volumétrique ayant un côté entrée et un côté évacuation, une conduite d'air s'étendant vers le côté entrée du compresseur volumétrique pour alimenter ledit compresseur volumétrique avec de l'air ambiant, un réservoir réfrigérant intermédiaire dont une entrée est raccordée au côté évacuation du compresseur volumétrique et dont une sortie est raccordée au collecteur d'admission d'air pour fournir de l'air de charge surcompressé au moteur, une soupape d'étranglement disposée dans un tuyau d'air d'admission en amont d'un orifice d'entrée à côté d'une soupape d'admission du moteur pour commander l'alimentation en air vers la chambre de combustion, dans lequel la soupape d'étranglement est agencée pour assurer une détente substantiellement adiabatique de l'air de charge pendant une course d'admission du moteur, et une unité de commande électronique pour commander le système, **caractérisé en ce que** le système est muni de moyens pour évacuer au moins une partie de l'air de charge surcompressé en aval de la soupape d'étranglement pendant au moins une course de non admission du moteur.

2. Système selon la revendication 1, **caractérisé en ce que** la soupape d'étranglement est une soupape d'étranglement fixe.

3. Système selon la revendication 1, **caractérisé en ce que** la soupape d'étranglement est une soupape d'étranglement sans commutation asservie, agencée pour être ouverte pendant une course d'admission du moteur et pour être asservie pendant une course de non admission du moteur.

4. Système selon la revendication 1, **caractérisé en ce que** la soupape d'étranglement est une soupape d'étranglement de commutation asservie, agencée pour être ouverte pendant une course d'admission du moteur et pour être fermée pendant une course de non admission du moteur.

5. Système selon l'une quelconque des revendications 1 à 4 ci-dessus, **caractérisé en ce que** le système comprend une conduite de retour raccordée entre le tuyau d'admission en aval de la soupape d'étranglement et le compresseur volumétrique.

6. Système selon la revendication 5, **caractérisé en ce que** la conduite de retour est raccordée à un côté admission d'un compresseur dans le compresseur volumétrique.

7. Système selon la revendication 5, **caractérisé en ce que** la conduite de retour est raccordée directement à un étage de compresseur dans le compresseur volumétrique.

8. Système selon la revendication 5, **caractérisé en ce que** la conduite de retour est raccordée à un côté admission d'une turbine dans un compresseur volumétrique.

9. Système selon la revendication 4, **caractérisé en ce que** la conduite de retour est munie d'une soupape sans commutation asservie, agencée pour être fermée pendant une course d'admission du moteur et pour être asservie pendant une course de non admission du moteur.

10. Système selon la revendication 4, **caractérisé en ce que** la conduite de retour est munie d'une soupape de commutation asservie, et **en ce que** la soupape de commutation asservie est agencée pour être fermée pendant une course d'admission du moteur et pour être ouverte pendant une course de non admission du moteur.

11. Système selon la revendication 4, **caractérisé en ce que** la conduite de retour est munie d'une soupape asservie à la pression, agencée pour être ouverte lorsqu'une pression prédéterminée est atteinte en aval de la soupape d'étranglement.

12. Système selon la revendication 1, **caractérisé en ce que** le système est muni de moyens de commande de soupape d'admission et d'évacuation, agencés pour fournir un recouvrement de soupapes, dans lequel le gaz d'échappement résiduel est évacué de la chambre de combustion par l'air de charge surcompressé.

13. Système selon la revendication 12, **caractérisé en ce que** le compresseur volumétrique est un turbocompresseur agencé en aval de la chambre de combustion.

14. Procédé de commande d'un système selon la revendication 1, **caractérisé par** les étapes consistant à :
- surcompresser l'air de charge à fournir à un moteur ;
- effectuer une première étape de refroidissement en faisant passer l'air surcompressé à travers un réservoir réfrigérant intermédiaire ;
- effectuer une deuxième étape de refroidissement au moyen d'une détente substantiellement adiabatique, en détendant l'air surcompressé à travers une soupape d'étranglement pendant une course d'admission ;
- fournir l'air de charge à un orifice d'entrée du moteur pendant la course d'admission ; et
- évacuer au moins une partie de l'air de charge dudit orifice d'entrée pendant au moins une course de non admission du moteur.

15. Procédé pour commander un système selon la revendication 14, **caractérisé par** la réalisation d'une deuxième étape de refroidissement au moyen d'une détente substantiellement adiabatique à travers une soupape d'étranglement fixe.

16. Procédé pour commander un système selon la revendication 14, **caractérisé par** la réalisation d'une deuxième étape de refroidissement au moyen d'une détente substantiellement adiabatique à travers une soupape d'étranglement sans commutation asservie, la soupape étant ouverte pendant une course d'admission du moteur et asservie pendant une course de non admission du moteur.

17. Procédé pour commander un système selon la revendication 14, **caractérisé par** la réalisation d'une deuxième étape de refroidissement au moyen d'une détente substantiellement adiabatique à travers une soupape d'étranglement de commutation asservie, la soupape étant ouverte pendant une course d'admission du moteur et à fermer pendant une course de non admission du moteur.

18. Procédé selon la revendication 14, **caractérisé par** la fourniture de l'air de charge évacué à un compresseur volumétrique.

19. Procédé selon la revendication 14, **caractérisé par** la commande du débit d'air de charge évacué par la fermeture d'une soupape sans commutation asservie dans la conduite de retour pendant une course d'admission du moteur et la commande de la soupape de commutation pendant une course de non admission du moteur.

20. Procédé selon la revendication 14, **caractérisé par** la commande du débit d'air de charge évacué par la fermeture de la soupape de commutation asservie dans la conduite de retour pendant une course d'admission du moteur et l'ouverture de la soupape de commutation pendant une course de non admission du moteur.

21. Procédé selon la revendication 14, **caractérisé par** la commande du débit d'air évacué par l'ouverture d'une soupape asservie à la pression à une pression prédéterminée en aval de la soupape d'étranglement.
